# EUROPEAN PATENT APPLICATION

(11) **EP 4 737 304 A1**
(43) Date of publication of application: **06.05.2026**
(21) Application number: 24210877.7
(22) Date of filing: 05.11.2024
(51) Int. Cl.: B63B 59/02

(54) **MOVABLE FENDER APPARATUS**

(71) Applicant: HD Hyundai Mipo Co., Ltd., Ulsan 44113 (KR); Daelyun Engineering Co., Ltd., Busan 46055 (KR)
(72) Inventor: LIM, Jong Woo, 51606 Gyeongsangnam-do (KR); JEONG, Sung Yun, 44473 Ulsan (KR); PARK, Jang-Ik, 48078 Haeundae-gu, Busan (KR); PARK, Dong Jin, 03375 Seoul (KR)
(74) Representative: dompatent

(57) **Abstract**

The present disclosure provides a movable fender apparatus that can be folded for storage or expanded for use. The movable fender apparatus includes: a rail which is supported on a hull and inclined downward to the outside of the hull; an arm of which one end is slidingly coupled to the rail; at least one tension-adjusting pulley which is installed at the top of the rail, and at least two tension-adjusting pulleys which are installed at one end and the other end of the arm; a drive wire which extends from the outside of the rail to the other end of the arm via the tension-adjusting pulley; an actuator which adjusts the length of the drive wire by winding and unwinding one end of the drive wire located outside the rail; and a fender unit which is connected to the other end of the drive wire located at the other end of the arm, wherein when the drive wire is wound, the fender unit pushes the arm to locate the arm at the top of the rail, and when released, the fender unit is released from the arm and falls into the water by its weight.

## Description

### BACKGROUND OF THE INVENTION

### Field of the Invention

The present disclosure relates to a fender apparatus installed on a hull to provide a buffering effect during docking (or when contacting other vessels), and more specifically, to a movable fender apparatus that can be folded for storage or expanded for use.

### Background Art

Since a ship floats on water, it is difficult to fix the position of the ship accurately. Therefore, the ship is tied or pulled using a rope or a wire for anchoring or mooring to minimize movement. However, it is practically impossible to completely block even small movements caused by waves, etc.

Accordingly, there is a possibility that the ship will collide with docking structures (or other ships) when anchored at a dock or a quay wall (or adjacent ships). So, a buffer fender is generally installed between a hull and the docking structure (or adjacent ship) to stabilize conditions by absorbing shocks and fixing the position.

Such a fender is typically made of foam or rubber (tube form or other forms) and is placed on a dock or a quay wall, but it is advisable to also apply the fender to the hull. However, for a large vessel like a bunker ship, it is difficult to apply a fender across the entire side of the vessel, and it is also difficult to adjust the height according to the position of a dock, a quay wall, or adjacent ships. Additionally, when the fender is hung by a rope, it may sway during navigation or may be detached from the hull, or the rope may be severed by movement between ships. Even if the fender is fixed to the hull, due to the protruding structure of the fender, the fender may collide against adjacent ships, so it is necessary to find an alternative for practical application.

### PATENT LITERATURE

### Patent Documents

Patent Document 1: Korean Patent Publication No. 10-2020-0139537 (December 14, 2020)

### SUMMARY OF THE INVENTION

Accordingly, the present disclosure has been made to solve the above-mentioned problems occurring in the prior arts, and it is an objective of the present disclosure to provide a fender apparatus applicable to a hull, specifically, a movable fender apparatus that can be folded to be stored inside the hull or expanded to the outside of the hull for use.

The objectives of the present disclosure are not limited to those mentioned above, and other objectives not mentioned herein will be clearly understood by those skilled in the art from the following description.

To accomplish the above object, according to the present disclosure, there is provided a movable fender apparatus including: a rail which is supported on a hull and inclined downward to the outside of the hull; an arm of which one end is slidingly coupled to the rail; at least one tension-adjusting pulley which is installed at the top of the rail, and at least two tension-adjusting pulleys which are installed at one end and the other end of the arm; a drive wire which extends from the outside of the rail to the other end of the arm via the tension-adjusting pulley; an actuator which adjusts the length of the drive wire by winding and unwinding one end of the drive wire located outside the rail; and a fender unit which is connected to the other end of the drive wire located at the other end of the arm, wherein when the drive wire is wound, the fender unit pushes the arm to locate the arm at the top of the rail, and when released, the fender unit is released from the arm and falls into the water by its weight.

The fender unit is automatically released from the arm when the arm stops by reaching the lowermost end of the rail.

The rail includes a curved section that changes the path of the arm before reaching the lowermost end to change an angle of the arm in a direction that the inclination of the arm decreases.

The movable fender apparatus further includes: interlocking parts which are arranged at the other end of the arm and the other end of the drive wire to engage with each other when adjacent, and are away from each other to be separated from each other as an included angle formed between the other end of the arm and the other end of the drive wire is increased by the angle change of the arm.

The interlocking parts are separated from each other when the included angle exceeds a limit angle just before the arm reaches the lowermost end of the rail.

The tension-adjusting pulley includes a first direction-changing pulley installed at the top of the rail, a second direction-changing pulley installed at the other end of the arm, and an arm-adjusting pulley installed at one end of the arm and positioned between the first and second direction-changing pulleys to be lower than the first and second direction-changing pulleys, thereby distributing the load of the arm to both sides of the drive wire of the first direction-changing pulley side and the drive wire of the second direction-changing pulley side.

The movable fender apparatus further includes a tensioner pulley provided between the first direction-changing pulley and the actuator and between the arm-adjusting pulley and the second direction-changing pulley to increase tension by pressurizing the drive wire.

The movable fender apparatus further includes an independent drive unit applying towing force to the arm independently from the drive wire to adjust only the position of the arm when the fender unit is released.

The independent drive unit includes: a pulley unit including a fixed pulley and a variable pulley; a towing wire, one end of which is connected to the arm and the other end winds around the fixed pulley and the variable pulley at least once and is connected to a weight block; and a cylinder unit connected to the variable pulley to be extendable to adjust a distance between the fixed pulley and the variable pulley, thereby providing towing force to the arm.

In a fixed state of the cylinder unit, the towing wire is pulled by the weight block to maintain tension.

The movable fender apparatus further includes: a locking hook formed on one side of the arm; and a clip module installed at the top of the rail and repeatedly varied between an opening position and a coupling position coupled with the locking hook by pressure of the locking hook.

The clip module includes: a hook part which is coupled to a hinge shaft to swing vertically and includes a beveled part being in beveled contact with the locking hook to swing by a beveling action of the beveled part; a way plate which is arranged vertically and having a flat cam track connecting a first fixed point and a second fixed point with different heights via a closed loop; and a link, of which one end is connected to the hook part and the other end is inserted into the cam track, and which moves along the cam track as the hook part swings and varies the height of the hook part between the height corresponding to the first fixed point and the height corresponding to the second fixed point.

The movable fender apparatus further includes fender storage pockets which extend on both sides of the arm and are in contact with the sides of the fender unit to prevent movement of the fender unit being in contact with the arm.

According to the present disclosure, the fender apparatus can be used at various locations such as docking facilities and sea by operating the fender from the hull. The fender apparatus of the present disclosure is movable, so can be adjusted and used on or above the surface of the water when being in contact with a dock, a quay wall, or other ships, and can be stored inside the hull during navigation, thereby overcoming the problem of navigation being hindered by the fender. Moreover, the present disclosure optimizes the operating and installation structures of the fender, thereby efficiently utilizing limited spaces of complex ships, and being applicable to special ships with narrow decks and unique structures, such as bunker ships with protruding structures or inclinations on the upper portion of the hull. Therefore, it is possible to deploy the movable fender apparatus of the present disclosure on various types of ships to realize a more convenient and effective buffering structure.

### BRIEF DESCRIPTION OF THE DRAWINGS

FIG. 1 is a perspective view of a movable fender apparatus according to an embodiment of the present disclosure.
FIG. 2 is a conceptual diagram illustrating a state where the fender apparatus of FIG. 1 is applied to a hull.
FIG. 3 is a front view illustrating the structure of the fender apparatus of FIG. 1 in more detail.
FIG. 4 is a drawing illustrating a connection structure between an arm and a wire of the fender apparatus of FIG. 3 in more detail.
FIGS. 5 and 6 are operational diagrams illustrating the operation of a clip module illustrated in FIG. 3.
FIG. 7 is a side view illustrating the structure of the fender apparatus of FIG. 1 in more detail.
FIG. 8 is an operational diagram illustrating the operation of an independent drive unit illustrated in FIG. 7.
FIG. 9 is an operational diagram illustrating the lowering operation of a fender unit of the fender apparatus of FIG. 1.
FIG. 10 is an operational diagram illustrating the raising operation of the fender unit of the fender apparatus of FIG. 1.
FIG. 11 is a view illustrating a stored state and an expanded state (usage state) of the fender apparatus of FIG. 1.
FIG. 12 is a view illustrating the adjustment operation of the arm using the independent drive unit in the expanded state of the fender apparatus of FIG. 11.

### DETAILED DESCRIPTION OF THE PREFERRED EMBODIMENT

Advantages and features of the present disclosure and methods accomplishing the advantages and features will become apparent from the following detailed description of exemplary embodiments with reference to the accompanying drawings. However, the present invention is not limited to the exemplary embodiment disclosed herein but will be implemented in various forms. The exemplary embodiments are provided so that the present invention is completely disclosed, and a person of ordinary skilled in the art can fully understand the scope of the present invention. Therefore, the present invention will be defined only by the scope of the appended claims. The same reference numerals throughout the specification denote the same components.

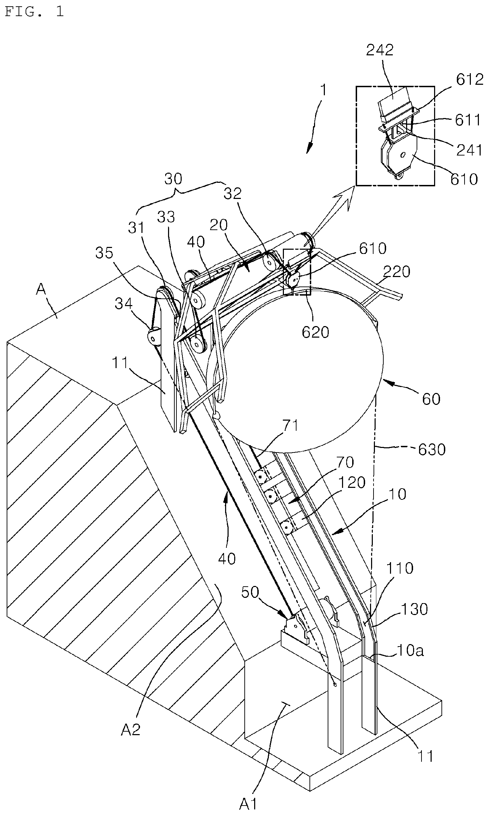

Hereinafter, a movable fender apparatus according to the present disclosure will be described in detail with reference to FIGS. 1 through 12.

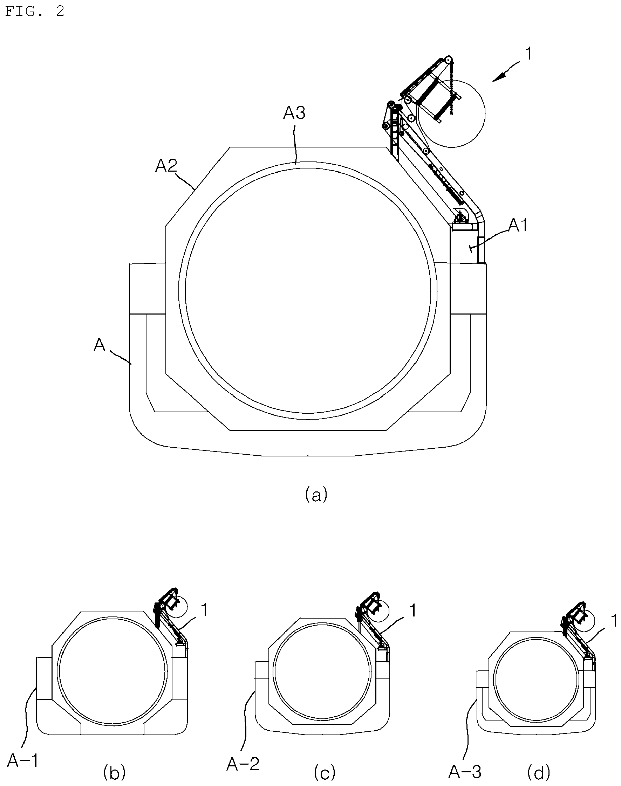

FIG. 1 is a perspective view of a movable fender apparatus according to an embodiment of the present disclosure, and FIG. 2 is a conceptual diagram illustrating a state where the fender apparatus of FIG. 1 is applied to a hull.

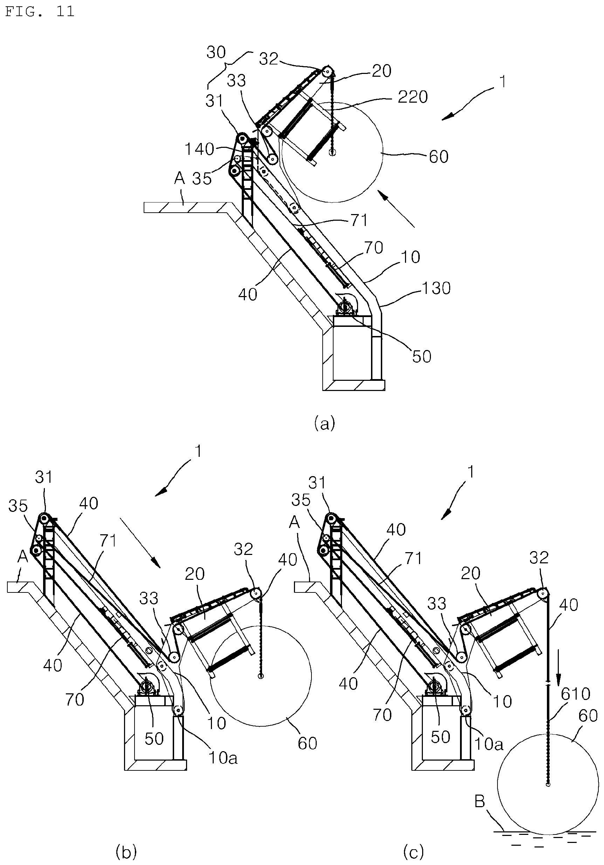

Referring to FIG. 1, the movable fender apparatus 1 according to the present disclosure can be installed and used on a hull A. The movable fender apparatus lowers a fender unit 60 toward the hull side to prevent collision between ships or between a ship and an anchored facility (refer to FIG. 11), and during ship navigation, the fender unit 60 can be stored and firmly fixed inside the hull as illustrated in FIG. 1. Thus, the present disclosure can protect the hull safely during unloading of cargo and reduce resistance during maritime navigation, aiding the ship navigation.

Specifically, since having a structure using the inclination of a rail 10, the movable fender apparatus 1 according to the present disclosure can be easily applied to ships with uneven decks or narrow spaces. For instance, even if there is a protrusion structure A2 (e.g., an internal cargo hold and/or a fueling station on a bunker ship), the rail 10 can still be installed directly on the curved or protruding parts of the hull, thereby reducing spatial constraints. Additionally, when a gap between the rail 10 and the hull A is simply adjusted, as described in the drawing, a walkway A1 can be effectively secured on the upper deck as illustrated, thus not obstructing the passage of people.

Such an example is further illustrated in FIG. 2. For instance, a bunker ship has a large internal cargo hold A3 embedded therein and a protruding structure A2 such as a fueling station located on the cargo hold, such that the upper deck may be narrowed. As illustrated in FIG. 2(a), the movable fender apparatus of the present disclosure can be installed outward from the hull A to secure the walkway A1 of the upper deck. Moreover, as illustrated in FIG. 2(b) to 2(d), the movable fender apparatus of the present disclosure can be practically applied in the same manner to ships of different sizes A-1, A-2, A-3, so can be utilized on various ships. The movable fender apparatus of the present disclosure can be installed singly or in multiple in the longitudinal direction of the hull as illustrated.

The movable fender apparatus 1 of the present disclosure is configured as follows. Referring to FIG. 1, the movable fender apparatus 1 includes: a rail 10 which is supported on the hull A and is inclined outward and downward from the hull A; an arm 20 of which one end is slidably coupled to the rail 10; at least one tension-adjusting pulley 30 installed at the top of the rail 10 and at least two tension-adjusting pulleys 30 installed at one end and the other end of the arm 20; a drive wire 40 which extends from the outside of the rail 10 to the other end of the arm 20 via the tension-adjusting pulley 30; an actuator 50 which winds or unwinds one end of the drive wire 40 to adjust the length of the drive wire 40 located outside the rail 10; and a fender unit 60 which is connected to the other end of the drive wire 40 positioned at the other end of the arm 20 to locate the arm 20 at the top of the rail 10 by pushing the arm 20 when the drive wire 40 is wound (see FIG. 11(a) and fall to the surface of the water [see FIG. 11(c)] by its weight by being released from the arm 20 when the drive wire 40 is unwound.

Due to the above configuration, the present disclosure operates the fender unit 60 and the arm 20 simultaneously with the drive wire 40. When the drive wire 40 is fully pulled, the fender unit 60 connected to the end of the drive wire 40 pushes the arm 20 up to the top of the rail 10 as illustrated in FIG. 1. When the drive wire 40 is released, the arm 20 and the fender unit 60 descend along the rail 10 until the arm 20, and then, the fender unit 60 is separated from the arm 20 when the arm 20 stops (reaches the bottom end 10a of the rail [see FIGS. 11(b) and 11(c)]. Therefore, it is possible to conveniently control the storage and release of the fender unit 60, and the positions of the fender unit 60 and the arm 20.

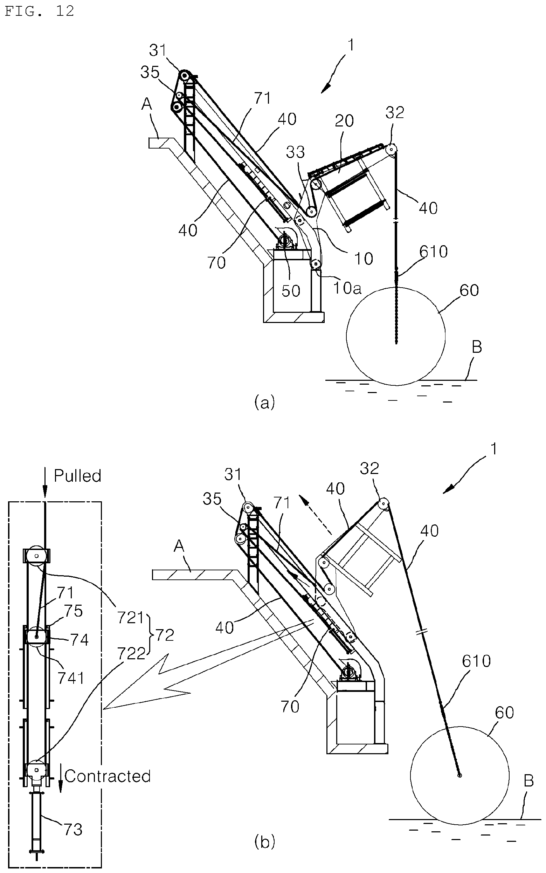

Furthermore, the present disclosure allows for the adjustment of only the position of the arm 20 while keeping the drive wire 40 and fender unit 60 stationary using an independent drive unit 70 [refer to FIG. 12(b)]. That is, the movable fender apparatus of the present disclosure can include the independent drive unit 70 which applies towing force to the arm 20 independently of the drive wire 40 (via a towing wire 71) in a state in which the fender unit 60 is released to adjust only position of the arm 20. Accordingly, the fender unit 60 can effectively eliminate any interference that may occur due to the proximity of the arm 20 and docking facilities, or the proximity of the arm 20 and other ships. So, the configuration also enhances the performance of the fender unit 60.

Hereinafter, the configuration and operation effects of the present disclosure will be described in more detail based on an embodiment of the present invention.

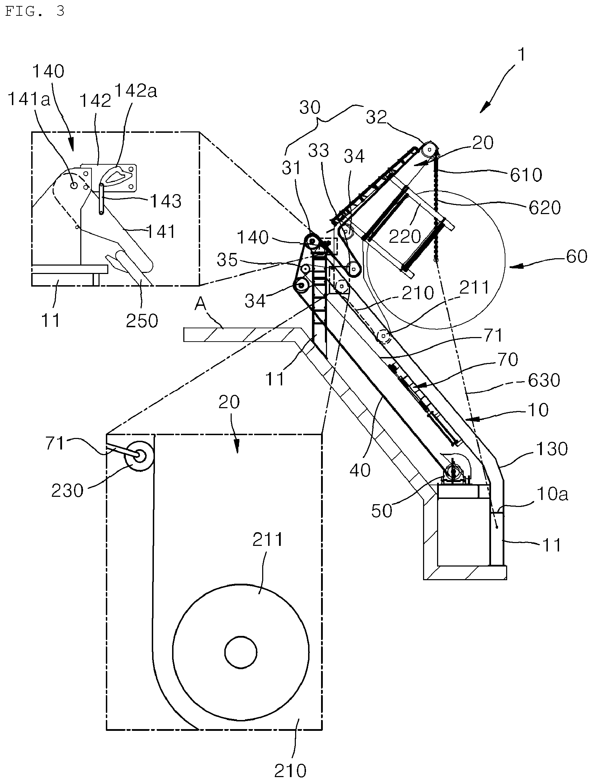

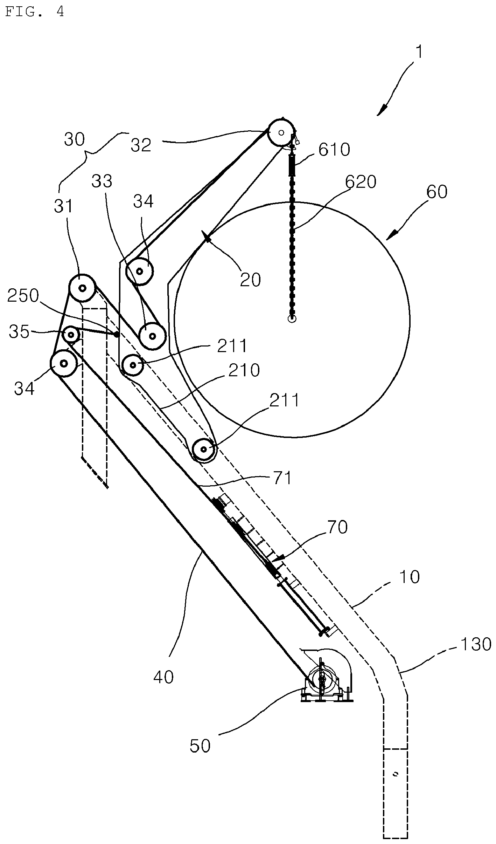

FIG. 3 is a front view illustrating the structure of the fender apparatus of FIG. 1 in more detail, and FIG. 4 is a drawing illustrating a connection structure between an arm and a wire of the fender apparatus of FIG. 3 in more detail. FIG. 4 omits accessories, such as fender storage pockets, for clarity.

First, the overall structure and concept of the movable fender apparatus will be described, and then, each component will be described in more detail with reference to FIGS. 1, 3 and 4. The movable fender apparatus of the present disclosure includes a rail 10, an arm 20 coupled to the rail 10, a tension-adjusting pulley 30 installed on the rail 10 and the arm 20, a drive wire 40 connected through the tension-adjusting pulley 30, an actuator 50 which operates the drive wire 40, and a fender unit 60 connected to the end of the drive wire 40.

First, the rail 10 is supported by the hull. As illustrated in FIG. 1, the rail 10 is inclined downward toward the outside (i.e., a lateral direction) of the hull A, enabling the arm 20 to descend by its weight. The inclination of the rail 10 may correspond to the inclination of a protruding structure A2 protruding toward the upper deck of the hull, but can also be adjusted if necessary. For example, the rail 10 can be adjusted in the spacing with the hull and also the height by supports 11 formed at both ends thereof, thus adjusting the angle of the rail 10 by extending the length of supports 11 or by forming the supports 11 asymmetrically at both ends. Moreover, by adjusting the length of supports 11 on a flat space, the rail 10 can be inclinedly installed. Accordingly, the present disclosure can be readily applied to conventional ships with spaces on the upper deck.

The rail 10 may have a guide groove 110 which couples with wheels 211 (see FIG. 4) formed at one end of the arm 20. Additionally, a support plate 120 for fixing the independent drive unit 70 may be installed on one side of the rail 10. Since the rail 10 forms the foundation of the entire apparatus, the rail 10 can be utilized to support other components with an appropriate structure.

The guide groove 110 of the rail 10 terminates at the bottom end 10a of the rail 10, hence the arm 20 automatically stops when reaching the bottom end 10a of the rail 10. Therefore, even if the drive wire 40 continues to be released, once the arm 20 reaches the bottom end 10a of the rail 10, the arm acts as a pulley mechanism to release the fender unit 60 in a fixed state. That is, the fender unit 60 is configured to be automatically released from the arm 20 once the arm 20 stops by reaching the bottom end 10a. The specific operations will be described in more detail later.

The rail 10 may also include a curved section 130 which changes the path of the arm 20 before reaching the bottom end 10a to change the angle of the arm 20 in the direction that the inclination of the arm 20 is reduced. The curved section 130 is formed just before the bottom end 10a of the rail. That is, the rail 10 is formed as a straight section without any change in inclination just before the curved section 130 from the top and is formed as the curved section 130 curving downward from the front of the bottom end 10a of the rail until reaching the bottom end of the rail. Since the arm 20 is coupled to maintain a predetermined angle relative to the tangent direction of the rail 10, the inclination may be changed as the tangent changes in the curved section 130. Due to the above configuration, it is possible to expand the arm 20 more horizontally at the bottom end of the rail 10, thus eliminating any interference between the side of the hull and the fender unit 60 by spacing the lowering point of the fender unit 60 from the side of the hull. Additionally, such a change in angle can also enable the automatic release of the fastened structure between the fender unit 60 and the arm 20 (refer to interlocking parts 241 and 611 in FIGS. 1, 9 and 10). The effects of the fastened structure between the fender unit 60 and the arm 20 and the angle change of the arm will be described in more detail later.

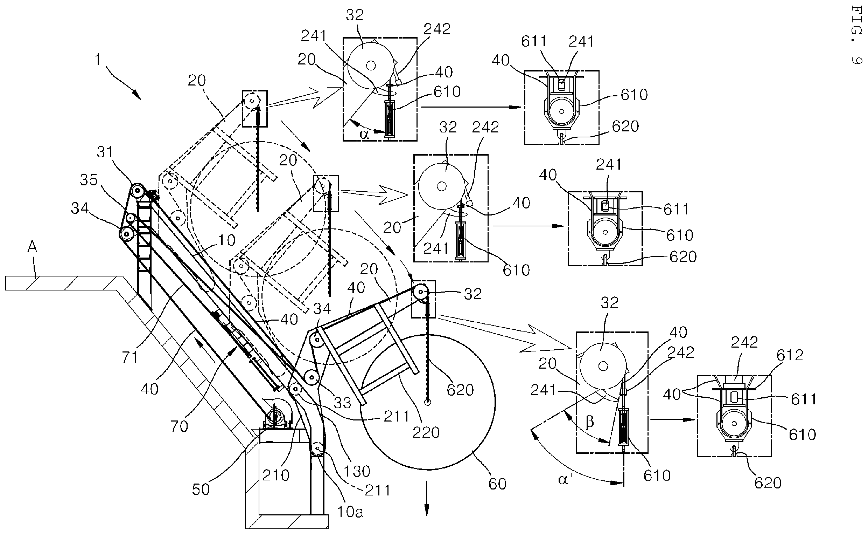

The arm 20 may be a bar-like structure that an end is slidably coupled to the rail 10. One end of the arm 20 is coupled to the rail 10, and the other end of the arm 20 protrudes in a direction perpendicular or approximately perpendicular to the rail 10 to form a descent point (or support point) for the fender unit 60. The arm 20 is formed in the shape of a bar or a bent bar having one end and the other end, and is formed to slide while maintaining a predetermined angle relative to the tangent direction of the rail 10. Thus, the arm 20 does not change the inclination in the straight section of the rail 10 but changes the inclination in the curved section 130 (refer to FIG. 9).

Referring to FIG. 4, the arm 20 will be described in more detail as follows. The arm 20 may be appropriately bent to effectively support the load of the fender unit 60 and to allow for the storage of the fender unit 60. One end of the arm 20 may be extended to form a slider 210, and the other end may protrude in a straight form. The overall protrusion direction of the arm 20 may be approximately perpendicular to the rail 10. However, the shape of the arm 20 can be modified as needed, so it is not limited to the examples shown.

One end of the arm 20 is slidably coupled to the rail 10. The one end of the arm is the side that couples with the rail. At the end of the arm 20, a slider 210 including a pair of wheels 211 that couple with the rail 10 at two or more points can be placed. The slider 210 may be a part of the arm 20 which extends for coupling with the rail 10. Through the slider 210, the arm 20 is slidably coupled to the rail 10 and supports two points of the rail 10 by the wheels 211, so can move without overturning. The detailed structure of the slider 210 can be modified as long as such operation is possible.

The arm 20 may be a bar or a bent bar with one side on which the slider 210 is formed and the other side which protrudes toward the opposite side and on which a second direction-changing pulley 32 is installed. The other end of the arm 20 which protrudes from the rail 10 can support the fender unit 60 hung on the other end of the arm while sliding. The length, size, thickness, and material of the arm 20 can be varied depending on the load, size, thickness, etc., of the fender unit 60.

The tension-adjusting pulley 30 is installed to connect the drive wire 40 from the actuator 50 to the other end of the arm 20. As illustrated in FIG. 4, the tension-adjusting pulley 30 can include at least one tension-adjusting pulley (first direction-changing pulley 31) on the top of the rail 10, and at least two tension-adjusting pulleys (an arm-adjusting pulley 33 and a second direction-changing pulley 32) at both ends of the arm 20. Therefore, the drive wire 40 extends from the top of the rail 10 through one end of the arm 20 (namely, along the arm-adjusting pulley 33) to the other end of the arm 20. The distal end of the drive wire 40 winds around the tension-adjusting pulley (i.e., the second direction-changing pulley 32) at the other end of the arm 20 and extends downwards due to gravity. Thus, the fender unit 60 can be coupled to the distal end of the drive wire 40 (in the same position as the connection part 610) located at the other end of the arm 20 using a connection part 610.

Referring to FIG. 4, the alignment of the tension-adjusting pulley 30 and the drive wire 40 will be described in more detail as follows. The tension-adjusting pulley 30 can include: the first direction-changing pulley 31 installed at the top of the rail 10; the second direction-changing pulley 32 installed at the other end of the arm 20; and the arm-adjusting pulley 33 installed at one end of the arm 20. The drive wire 40 sequentially passes through the tension-adjusting pulleys from the outside of the rail 10 to the other end of the arm 20 (i.e., from the first direction-changing pulley 31 at the top of the rail to the arm-adjusting pulley 33 at one end of the arm to the second direction-changing pulley 32 at the other end of the arm). That is, the drive wire 40 maintains tension while passing between the first direction-changing pulley 31, the arm-adjusting pulley 33, and the second direction-changing pulley 32 in zigzags.

In this instance, the one end of the arm 20 at which the arm-adjusting pulley 33 is located (the side coupled to the rail) is lower than the other end of the arm 20 (the protruding side) where the second direction-changing pulley 32 is placed, and is also lower than the top of the rail 10 at which the first direction-changing pulley 31 is located due to the inclination of the rail 10. Thus, the arm-adjusting pulley 33 functions as a kind of moving pulley that is hung lower than the first and second direction-changing pulleys 31 and 32, helping to distribute the load of the arm 20. That is, the arm-adjusting pulley 33 is placed between the first and second direction-changing pulleys 31 and 32 to be lower than both the first and second direction-changing pulleys 31 and 32, thereby distributing the load of the arm 20. That is, the arm-adjusting pulley 33 is placed between the first and second direction-changing pulleys 31 and 32 to be lower than both the first and second direction-changing pulleys 31 and 32, thereby distributing the load of the arm 20 toward the drive wire connected to the first direction-changing pulley 31 and the drive wire connected to the second direction-changing pulley 32.

Due to the above structure, even if the load of the arm 20 is increased, the present disclosure can reduce the load using the arm-adjusting pulley, thereby facilitating the operation of the arm 20 by winding or unwinding the drive wire 40. Furthermore, tensioner pulleys 34 which increase tension by pressurizing the drive wire 40 can be placed between the first direction-changing pulley 31 and the actuator 50 operating the drive wire 40 and between the arm-adjusting pulley 33 and the second direction-changing pulley 32 to maintain the tension and more immediately transmit the driving force of the drive wire 40. The tensioner pulley 34 can be appropriately positioned on one side of the rail 10 located between the first direction-changing pulley 31 and the actuator 50 and on one side of the arm 20 located between the arm-adjusting pulley 33 and the second direction-changing pulley 32.

The actuator 50 is installed to drive the drive wire 40. The actuator 50 can adjust the length of the drive wire 40 by winding or unwinding the end of the drive wire 40 located on the outside of the rail 10. The actuator 50 can be positioned using the rail 10 to operate the drive wire 40 from the rail 10. Preferably, the actuator 50 can be positioned below the first direction-changing pulley 31 to ensure that the drive wire 40 is wound more tightly around the first direction-changing pulley 31. If necessary, the position of the actuator can be changed, so the present disclosure is not limited thereto. The actuator 50 can be formed, for example, as a winch that winds or unwinds the wire.

The fender unit 60 is connected to the other end of the drive wire 40. The drive wire 40 has one end connected to the actuator 50, and the other end extending through the tension-adjusting pulley 30 to the other end of the arm 20 and connected to the fender unit 60. Therefore, when the drive wire 40 is fully pulled (by being wound around the actuator), the fender unit 60 connected to the distal end of the drive wire 40 pushes the arm 20 up to the top of the rail 10, and when the drive wire 40 is released, both the arm 20 and the fender unit 60 descend along the rail 10 due to their own weight. As the arm 20 and the fender unit 60 descend, when the arm 20 reaches and stops at the lowermost end of the rail 10a, the fender unit 60 is separated from the arm 20 (see FIGS. 11(b), 11(c)). Thus, the storage and release of the fender unit 60 and the positioning of the fender unit 60 and the arm 20 can be conveniently controlled by the drive wire (or the actuator operating the drive wire). Detailed operation of the fender unit 60 will be described later.

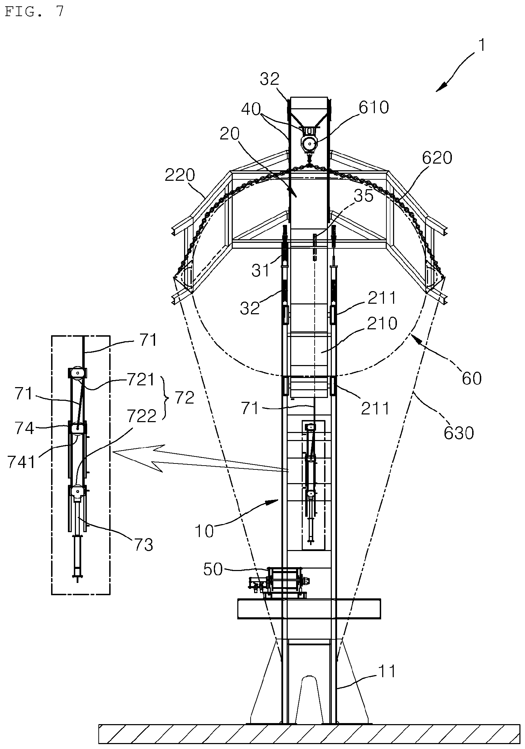

The fender unit 60 is connected to the other end of the drive wire 40 through the connection part 610 and is fixed by a fixing chain 620 positioned between the connection part 610 and the fender unit 60. Therefore, it is reasonable to understand the other end of the drive wire 40 as equivalent to the connection part 610. The fender unit 60 can be formed as a sphere or approximately spherical and can also be formed as a ellipsoid body which is convex on both sides (see 60 in FIG. 7). The fender unit 60 may be an elastic tube (e.g., rubber tube) which is filled with air or maintains its shape due to elasticity, or an elastically spherical form or an elliptical foam structure.

Referring to FIG. 3, fender storage pockets 220 can be positioned on both sides of the arm 20. The fender storage pockets 220 can be expanded from the top surface of the arm 20 to both sides of the arm 20, thus being in close contact with the sides of the fender unit 60 (see FIG. 7). The fender storage pockets 220 are expanded from both sides of the arm 20 and are in close contact with the sides of the fender unit 60, thereby preventing movement of the fender unit 60 being in close contact with the arm 20. The fender storage pockets 220 can be concavely formed structures facing the fender unit 60 and can be made by connecting bars. As described above, by placing the fender storage pockets 220 on the arm 20, the movement of the fender unit 60 during storage can be prevented. If necessary, side ropes 630 can be installed between the fender unit 60 and the rail 10 to secure the stored fender unit 60 (however, the side ropes can be released when the fender unit is used).

On one side of the rail 10, the independent drive unit 70 can be positioned. The independent drive unit 70 can apply towing force to the arm 20 independently of the drive wire 40, so can adjust only the position of the arm 20 in the state in which the drive wire 40 or the fender unit 60 is released. Referring to FIG. 4, the independent drive unit 70 can include a towing wire 71 of which one end is connected to the arm 20, so only the arm 20 can be operated by pulling the towing wire 71. Referring to the enlarged view of FIG. 3, the towing wire 71 can be connected at a towing ring 230 of which one end is formed at the arm 20. That is, the towing wire 71, independently of the previously mentioned drive wire 40, is directly connected at a position that can pull the arm 20 and can provide towing force only when necessary. The towing wire 71 can be connected at one end where the slider 210 is positioned on the arm 20 and can apply towing force to the arm 20 via a towing wire pulley 35 positioned at the top of the rail 10. The towing wire pulley 35 can function as a direction-changing pulley at the top of the rail 10 to change the tension of the towing wire 71 towards the tow ring 230 (see FIG. 12(b)). The structure and operation of the independent drive unit 70 will be described in more detail later.

Based on such a configuration, the present disclosure can have various detailed structures. The detailed structures include a fastening structure for fastening the arm reaching the top of the rail. First, referring to FIGS. 3, 5, and 6, a clip module which is fastened with the arm at the top of the rail will be described.

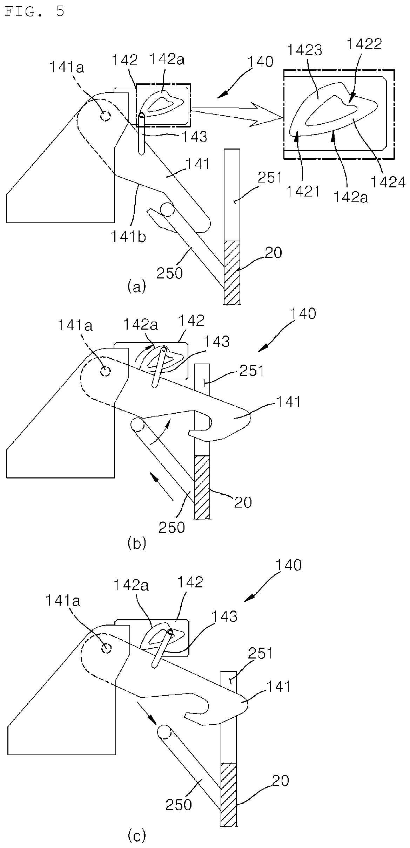

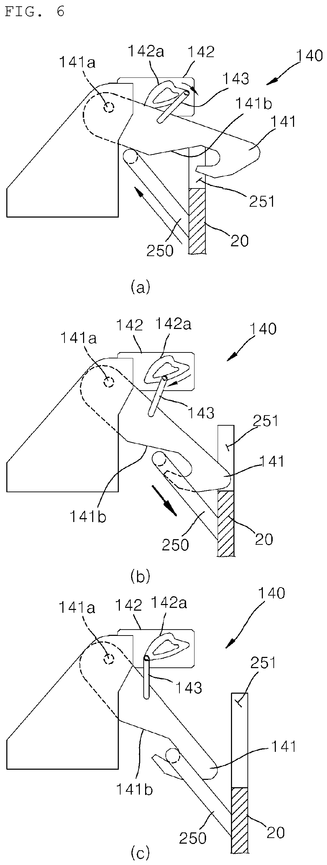

FIGS. 5 and 6 are operational diagrams illustrating the operation of the clip module depicted in FIG. 3.

Referring to the enlarged view of FIG. 3, the clip module 140 can be used to fix the arm 20 at the top of the rail 10. A locking hook 250, which may protrude towards the clip module from one side of the arm 20, is formed on one side of the arm 20, and the clip module 140 is installed at the top of the rail 10, so that the locking hook 250 and the clip module are coupled with each other. Therefore, when the arm 20 reaches the storage position (the top of the rail), the arm 20 can also be fixed by the clip module 140. The clip module 140 is designed to automatically open or close in response to the movement of the arm 20, so no additional operation is needed. The clip module 140 can repeatedly vary between an opening position and a coupling position, at which the clip module 140 is coupled with the locking hook 250, under the pressure of the locking hook 250.

The clip module 140 may include a hinge-coupled hook part 141 and a way plate 142 having a cam track 142a, wherein the hinge-coupled hook part 141 and the way plate 142 are connected by a link member 143. The clip module illustrated in FIG. 3 corresponds to the coupling position, and when the pressure of the locking hook 250 acts onto the hook part, the hook part 141 can automatically change the position to the opening position along the cam track 142a.

FIGS. 5 and 6 illustrate the structure of the clip module 140 in more detail. Referring to FIG. 5, the clip module 140 includes: a hook part 141 which has a hinge shaft 141a and a beveled part 141b coupled to the hinge shaft 141a to swing vertically and be in bevel contact with the locking hook 250, thereby swinging by the beveling action of the beveled part 141b; a way plate 142 which has a flat cam track 142a formed by connecting a first fixed points 1421 and a second fixed point 1422 with different heights via a closed loop and is arranged vertically; and a link member 143 of which one end is connected to the hook part 141 and the other end is inserted into the cam track 142a to move along the cam track 142a during swinging of the hook part 141 and which varies the height of the hook part 141 between a first height corresponding to the first fixed point 1421 and a second height corresponding to the second fixed point 1422.

Therefore, the hook part 141 is coupled to the hinge shaft 141a to be able to swing. The link member 143 can move along the cam track 142a under the pressure of the locking hook 250 to adjust the height of the hook part 141. The cam track 142a is a closed loop, so each time pressure is applied, the link member 143 cycles through different paths (the ascending path 1423 and the return path 1424) connecting the two fixed points (first fixed point 1421 and second fixed point 1422) to change the height of the hook part 141.

The way plate 142 includes the flat cam track 142a and is positioned vertically. Therefore, the cam track 142a is aligned vertically. Referring to the enlarged view in FIG. 5(a), the cam track 142a is a concave groove and includes the first fixed point 1421 and the second fixed point 1422 of different heights. The first fixed point 1421 and the second fixed point 1422 are connected by different paths-the ascending path 1423 and the return path 1424.

The link member 143 has one end coupled to the hook part 141 via a hinge and the other end inserted into the cam track 142a. Therefore, the link member 143 can change the position of the hook part 141 while moving along the cam track 142a. Due to the above structure, the clip module 140 can operate as follows.

First, in the fixed state of the arm, as illustrated in FIG. 5(a), the locking hook 250 of the arm 20 can engage the hook part 141 for fastening. The state may occur when the arm 20 is raised to the top of the rail, either with the fender unit or alone in storage. Since the hook part 141 is coupled to the top of the rail (see 11 in the enlarged view of FIG. 3), the hook part 141 can fasten the arm 20 coupled with the locking hook 250 to prevent falling once engaged with the locking hook 250.

In this state, when the locking hook 250 pushes the hook part 141, the hook part 141 is swung upward by the beveling action of the beveled part 141b as illustrated in FIG. 5(b). Since the locking hook 250 is coupled to the arm 20, when the arm 20 is pulled upward by operating the drive wire (i.e., when the drive wire is wound to push the arm toward the hook part), the hook part 141 can be easily lifted. A groove 251 may also be formed on one side of the arm 20 to eliminate interference with the hook part.

As the hook part swings, the link member 143 reaches the second fixed point 1422 along the ascending path 1423 of the cam track 142a by the upward rotation of the hook part 141 as illustrated in FIG. 5(b) . When reaching the second fixed point which is a concave groove, the link member 143 is caught to the second fixed point, and the hook part 141 is suspended from the link member 143, halting the descent. Therefore, as illustrated in FIG. 5(c), the hook part 141 is fixed at the second height corresponding to the second fixed point 1422 (opening position), and the locking hook 250 can be discharged from the hook part 141. Before moving the arm 20 to the lower end of the rail, the above-mentioned operation is performed to open the clip module 140, and then the arm can be moved along the rail.

Meanwhile, to store the arm at the top of the rail, when the arm 20 is moved in the reverse direction, as illustrated in FIG. 6 (a), the locking hook 250 re-applies pressure to the hook part 141. In this instance, the hook part 141 rises again and is separated from the second fixed point 1422, thereby releasing the open state. That is, the hook part 141 pushes the link member 143 upward to separate the link member 143 from the second fixed point 1422 where the link member 143 has been caught, and then, the the link member 143 enters the return path 1424 due to the closed-loop structure as illustrated in FIG. 6(a) . The above-mentioned operation can be performed by slightly pulling the arm with the drive wire.

Subsequently, as illustrated in FIG. 6(b), when the drive wire is released to lower the arm 20, the hook part 141 engages with the locking hook 250 while lowering along the retreating locking hook 250. That is, the link member 143 follows the return path 1424 back to the first fixed point 1421, which is the original point to locate the hook part 141 at the first height (coupling position) corresponding to the first fixed point 1421. Therefore, the clip module 140 and the locking hook 250 can be re-engaged as in the original coupled state illustrated in FIG. 5(a). The arm 20 can be conveniently fixed at the top of the rail by repeating the above-mentioned operation.

That is, when storing the arm 20 at the top of the rail, by pulling the drive wire to slightly press the locking hook 250 against the hook part 141, the hook part 141 moves to the first height (coupling position, i.e., as illustrated in FIG. 6(c) to engage with the locking hook 250, thereby securing the arm 20 more firmly. Moreover, when lowering the arm 20 to the bottom of the rail, by slightly pulling the drive wire to press the locking hook 250 against the hook part 141, the hook part 141 moves back to the second height (the opening position, i.e., as illustrated in FIG. 5(c), thus easily releasing the engaged state. As described above, the clip module 140 which can be operated conveniently, allows the arm 20 to be very conveniently secured with simple operations.

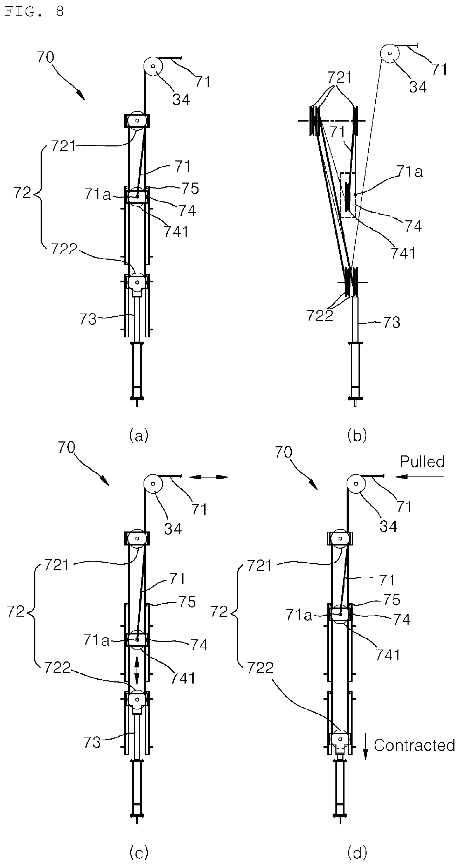

Hereinafter, referring to FIGS. 4, 7, and 8, the structure and operation of the independent drive unit will be described in more detail. FIG. 7 is a side view illustrating the structure of the fender apparatus of FIG. 1 in more detail, and FIG. 8 is an operational diagram illustrating the operation of an independent drive unit illustrated in FIG. 7.

Referring to FIGS. 4 and 7, the independent drive unit 70 may include a towing wire 71 connected to the arm 20 and driving structures 72, 73, and 74 operating the towing wire 71. Since the independent drive unit 70 is connected to the arm 20 independently of the drive wire 40 (see FIG. 4), the independent drive unit 70 can maintain tension automatically, regardless of the operation of the drive wire 40. Thus, while automatically maintaining tension, the independent drive unit 70 must also tow the arm 20, so the driving structure of the independent drive unit 70 may differ from conventional actuators. Referring to FIG. 7, the independent drive unit 70 may include: a pulley unit 72 which has a fixed pulley 721 and a variable pulley 722; a towing wire 71 of which one end is connected to the arm 20 (possibly connected to the towing hook 230 of FIG. 3) and the other end is wound around both the fixed pulley 721 and the variable pulley 722 at least once and connected to a weight block 74; and a cylinder unit 73 which is connected to the variable pulley 722 to extend and adjusts the distance between the fixed pulley 721 and the variable pulley 722 to provide towing force to the arm 20. As described above, the independent drive unit 70 can be installed using a support structure on the rail 10.

FIG. 8 illustrates the structure of the independent drive unit 70 in detail. FIG. 8(b) is a front view of the independent drive unit 70 shown as a side view in FIG. 8(a), with the spacing of the pulleys adjusted arbitrarily to demonstrate the wire connection structure. As illustrated in FIG. 8(b), both the fixed pulley 721 and the variable pulley 722 are formed in multiples, so multiple variable pulleys 722 and multiple fixed pulleys 721 can be coupled on the same axis. By forming both the fixed pulleys 721 and the variable pulleys 722 in multiples, gains of power by a movable pulley (variable pulley) can be amplified.

The weight block 74 is coupled to a guide structure to be pulled downward by its weight. The weight block 74 can be coupled to the guide structure to be slidable, and if necessary, the structure can be modified or additional weights can be added to increase the weight. The weight block 74 can be located between the fixed pulley 721 and the variable pulley 722.

The towing wire 71 has an end connected to the arm 20 (as referred to in FIG. 4) and the other end connected to the weight block 74 while wrapping around both the fixed pulley 721 and the variable pulley 722 at least once. That is, the end 71a of the towing wire 71, namely, the other end of the towing wire, is fixed to the weight block 74, maintaining tension due to the weight block's load. Since the arm 20 is either pulled by the drive wire 40 (refer to FIG. 4) or caught and fixed at the top or the bottom of the rail, the load of the arm 20 is not transferred to the weight block 74. However, when the arm moves, the towing wire 71 is also moved. So, the towing wire is drooped due to changes in position of the towing wire 71. The present disclosure can overcome such issues by connecting the end of the towing wire 71 to the weight block 74 to pull the weight block in response to the changes in position of the towing wire (refer to FIG. 8(c)).

To apply towing force to the arm using the independent drive unit 70, as illustrated in FIG. 8(d), the cylinder unit 73 can be contracted to increase the distance between the fixed pulley 721 and the variable pulley 722. That is, since the towing wire 71 wraps around both the fixed pulley 721 and the variable pulley 722, when the distance between the fixed pulley 721 and the variable pulley 722 is increased, the towing wire is pulled, thus applying towing force to the arm. The winding structure of the towing wire 71 and the pulley unit 72 will be described in more detail. The towing wire 71 passes through the towing wire pulley 35 (refer to FIG. 4), first wraps around the variable pulley 722, then wraps the fixed pulley 721, and finally is connected to the weight block 74. As illustrated in FIG. 8(b), if pairs of variable pulley 722 and fixed pulley 721 are formed in multiples, the winding structure can be repeated.

If necessary, an auxiliary pulley 741 can be installed on the weight block 74 so that the end 71a of the towing wire 71 is not directly fixed to the weight block but wraps around the auxiliary pulley 741 and another fixed pulley 721 before being fixed to the weight block. As described above, by adding additional pulleys, the force gain can be amplified. For the arrangement illustrated in FIG. 8(b), the towing wire 71 can wrap the pulleys in a sequence of the towing wire pulley 35, the first variable pulley 722, the first fixed pulley 721, the second variable pulley 722, the second fixed pulley 721, the auxiliary pulley 741, the third fixed pulley 721, and the weight block 74, and then, the end 71a of the towing wire 71 can be fixed to the weight block 74.

In this structure, since the variable pulley 722 is connected to the stretchable cylinder unit 73, the variable pulley 722 can move as illustrated in FIG. 8(d). Since the length of the towing wire is finite, when the cylinder unit 73 contracts and increases the distance between the variable pulley 722 and the fixed pulley 721, the towing wire 71 is pulled, thereby towing the arm. In this instance, the weight block 74 is caught and fixed by a stopper 75 positioned appropriately, and thus the end 71a of the towing wire 71 connected to the weight block 74 can be in a practical fixed state. Therefore, when the cylinder unit 73 induces a change in the distance between the variable pulley 722 and the fixed pulley 721, the arm is pulled corresponding to the increase in distance. Thus, the arm can be towed using only the towing wire 71 without the drive wire. Accordingly, the arm can be adjusted with the drive wire released, eliminating any interference caused by the arm. The adjustment operation of the arm using the independent drive unit will be further described later.

The fender apparatus of the present disclosure can operate as follows. Hereafter, referring to FIGS. 9 to 12, the operation of the movable fender apparatus will be described in more detail.

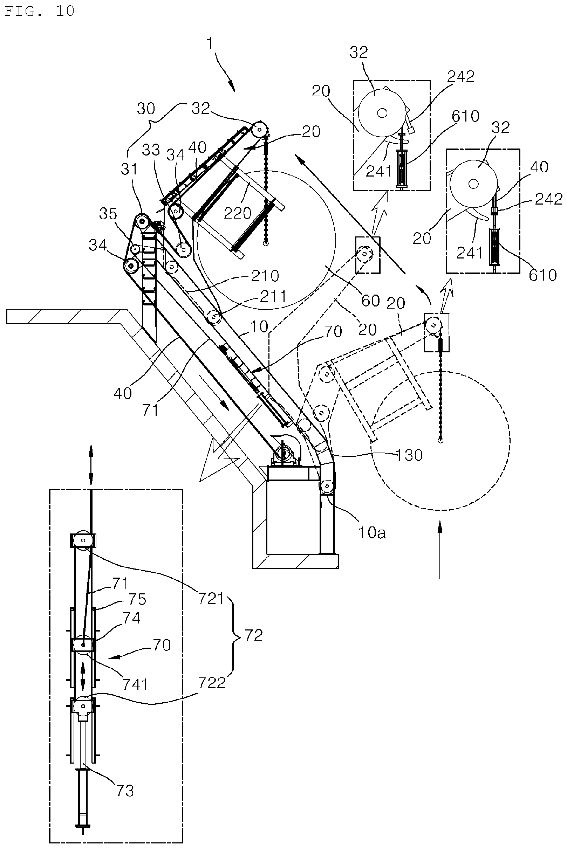

FIG. 9 is an operational diagram illustrating the lowering operation of a fender unit of the fender apparatus of FIG. 1, FIG. 10 is an operational diagram illustrating the raising operation of the fender unit of the fender apparatus of FIG. 1, and FIG. 11 is a view illustrating a stored state and an expanded state (usage state) of the fender apparatus of FIG. 1.

First, referring to FIGS. 9 to 11, the operation methods of the arm and the fender unit using the drive wire will be described.

The drive wire passes through the tension-adjusting pulley 30 (refer to FIG. 4) and is connected to the arm 20 and the fender unit 60, allowing the arm 20 and the fender unit 60 to be simultaneously lowered by releasing the drive wire 40, as illustrated in FIG. 9. Conversely, when the drive wire is wound in the opposite direction, as illustrated in FIG. 10, both the arm 20 and the fender unit 60 can be simultaneously raised. The one end of the drive wire 40 is connected to the actuator 50, and the other end passes through the first direction-changing pulley 31 located at the top of the rail 10, the arm-adjusting pulley 33 located at one end of the arm 20, and the second direction-changing pulley 32 located at the other end of the arm 20 and is connected to the fender unit 60. Thus, the pulling force of the actuator 50 acts on the fender unit 60 at the end of the drive wire. When the fender unit 60 is pulled, the fender unit 60 is caught to the other end of the arm 20, the arm 20 and the fender unit 60 can be manipulated simultaneously by winding and releasing the drive wire 40 in the state in which the fender unit 60 supports the arm 20. The above-mentioned operation is illustrated in FIG. 11.

In this instance, although the arm 20 is coupled to the rail 10 to be constrained by the rail, the fender unit 60 is not so. Therefore, when the arm 20 reaches the lowermost end 10a of the rail 10, the arm 20 and the fender unit 60 are automatically separated from each other. As illustrated in FIG. 11(c), when the drive wire 40 is released and lowers, once the arm 20 reaches the lowermost end of the rail 10, the arm 20 gets caught and stops, and the fender unit 60 is separated from the arm 20 and falls into the surface of the water B. Thus, the action of moving the arm 20 to the fender unit lowering point (outside the hull) and lowering the fender unit 60 are integrated, thereby conveniently releasing the fender unit 60 to prevent collisions between ships or between a ship and docking facilities. If the drive wire 40 is stopped at an appropriate position before the fender unit hits the surface of the water, the height of the fender unit 60 can also be adjusted.

The above-mentioned operation can be conducted solely with the drive wire 40, but using the fastening structure formed between the arm 20 and the fender unit 60 can make the process more efficient. Hereafter, referring to FIGS. 9 and 10, the raising and lowering operations of the arm 20 and the fender unit 60 associated with the fastening structure will be described in more detail.

The enlarged view in FIG. 9 shows a front view and a side view of the fastening structure between the arm and the fender unit from both front and side views, namely, the front view is located at the left side, and the side view is located at the right side connected by an arrow in the enlarged view). In FIG. 9, since the fastening structure is shown three-dimensionally, it is advisable to refer to both expanded views together.

Referring to the enlarged view in FIG. 9, interlocking parts 241 and 611 which are coupled with each other may be formed at the other end of the arm 20 (the end where the second direction-changing pulley 32 is installed) and the other end of the drive wire 40 extended to the other end of the arm 20 (the other end which corresponds to the connection part 610 since the connection part 610 is connected to the other end). The interlocking parts 241 and 611 are formed as pairs of a groove part 611 and a protrusion part 241, which are coupled with each other by press-fit when brought adjacent to each other. When the interlocking parts 241 and 611 are engaged, the other end of the arm 20 and the drive wire 40 are fixedly connected and immobilized relative to each other and the fender unit 60 connected to the drive wire 40 is also fixed relative to the arm, hence, in the engaged state of the interlocking parts 241 and 611, the tension of the drive wire 40 substantially acts only on the arm 20. Thus, in the engaged state of the interlocking parts 241 and 611, the arm 20 can be manipulated more easily.

As illustrated in FIG. 9, before the arm 20 reaches the lowermost end 10a of the rail 10, the interlocking parts 241 and 611 remain engaged. Thus, throughout the rail section, excluding the lowermost end 10a of the rail 10, the tension of the drive wire can be focused on the arm to facilitate easy sliding movement of the arm.

However, the interlocking parts 241 and 611 are released from the engaged state just before the arm 20 reaches the lowermost end 10a of the rail 10 (refer to the lower enlarged view of FIG. 9). Therefore, there is no issue in lowering the fender unit 60 at the lowermost end of the rail. That is, to release the fender unit 60, the drive wire 40 must move relative to arm 20, so the engagement state of the interlocking parts 241 and 611 can be automatically released just before reaching the lowermost end 10a of the rail 10 where the fender unit 60 is separated from arm 20. The rail 10 of the present disclosure includes a curved section 130 at the bottom that changes the angle of the arm 20, so the engagement state of the interlocking parts 241 and 611 can be automatically changed by the angle change of the arm 20 caused by the curved section.

More specifically, as the angle of the arm 20 changes, when the included angle α formed between the other end of the arm 20 and the other end of the drive wire 40 increases, the interlocking parts 241 and 611 get away from each other to be separated from each other (refer to the lower enlarged view of FIG. 9). That is, based on the other end of drive wire 40 which is pulled vertically, when the angle of the arm 20 changes, the interlocking parts 241 and 611 having the pairs of the protrusion part 241 and the groove part 611 can be automatically separated from each other depending on the interval change caused by the angle change.

As described above, the curved section 130 of rail 10 curves downward just before the lowermost end 10a, causing the path of the arm 20 to change just before reaching the lowermost end 10a and the angle to change in a direction that the slope decreases (to a more horizontal direction) (refer to the lower position in FIG. 9). Meanwhile, since the other end of drive wire 40 is pulled vertically, the included angle α between the other end of the arm 20 and the other end of the drive wire 40 increases as the slope of the arm 20 decreases (i.e., as arm 20 approaches the lowermost end of the rail) (see the enlarged view). Therefore, when an included angle a' between the other end of the arm 20 and the other end of the drive wire 40 increases to a degree that can separate the groove 611 from the protrusion part 241, as illustrated, the interlocking parts 241 and 611 can be separated automatically.

In other words, the interlocking parts 241 and 611 can be separated when the included angle a' exceeds a limit angle β. In this instance, the limit angle β may correspond to the length of the protrusion part 241, and the included angle α' can increase from the moment when enters the curved section 130 and exceed the limit angle just before the arm 20 reaches the lowermost end 10a of the rail. Thus, when the arm reaches the lowermost end of the rail, as illustrated, the interlocking parts 241 and 611 transition to the separated state. Once the interlocking parts 241 and 611 are separated from each other, the drive wire 40 and the fender unit 60 are no longer restrained by the arm 20, allowing the fender unit 60 to be separated from the arm 20 and fall into the water.

The connection part 610 is a part to connect the fender unit 60 to the other end of the drive wire 40, substantially defining the position of the other end of the drive wire 40. The connection part 610 can incorporate various structures capable of connecting the fender unit 610 and the drive wire 40. For example, the connection part 610 can be formed as a pulley device that is hung on the other end of the drive wire 40, and in such a case, the drive wire 40 can be passed through the connection part 610 and then fixed at an appropriate position on arm 20. However, since the connection part 610 can be modified in various forms, it is also possible to consider other types of connectors 610 that connect the fender unit 60 directly to the end of the drive wire 40 without using a pulley device. The connection part 610 is substantially identical to the other end of the drive wire 40, so the interlocking parts 241 and 611 can be formed at the other end of the arm 20 and the connection part 610. The groove part 611 and the protrusion part 241 of the interlocking parts 241 and 611 can change positions with each other, so the present disclosure is not limited to the drawings.

As illustrated in FIG. 9, since the interlocking parts 241 and 611 maintain the coupled state just before the arm 20 reaches the lowermost end 10a of the rail 10, the tension of the drive wire 40 is directly transmitted to the arm 20, thereby effectively lowering the arm 20 and the fender unit 60. Conversely, when the arm 20 is lifted, as illustrated in the enlarged view of FIG. 10, the slope of the arm 20 changes as the arm 20 enters the curved section 130 from the lowermost end 10a of the rail 10, so the wedging angle α (refer to FIG. 9) is reduced and the interlocking parts 241 and 611 are coupled automatically. Accordingly, the tension of the drive wire 40 is directly transmitted to the arm 20, so that the arm 20 and the fender unit 60 can be effectively lifted. Due to the interlocking parts 241 and 611, the arm 20 and the fender unit 60 can be manipulated with the drive wire more conveniently.

During such operations, as illustrated in the lower part of FIG. 10, when the fender unit 60 ascends and supports the arm 20, a fender stopper 242 can be installed at the rising point of the fender unit 60 to fix the connection part 610 of the fender unit 60 by contacting the other end of the arm 20 to the connection part 610 of the fender unit 60. The fender stopper 242 can serve to fix the connection part 610 of the fender unit, preventing the fender unit 60 from moving toward the second direction-changing pulley 32. The fender stopper 242 can have various structures, such as a protrusion structure to be caught to the connection part 610 at the other end of the arm 20. A connection plate 612 which increases a contact area with the fender stopper (see the enlarged view at the lower part of FIG. 9) may be provided on the corresponding side of the connection part 610 contacting to the fender stopper 242.

Moreover, when the arm 20 is raised to the top of the rail 10, the clip module 140 (refer to FIG. 3) is coupled to the locking hook 250 (refer to FIG. 3) to fix the arm 20. Thus, the arm 20 and the fender unit 60 are fixed by the interlocking parts 241 and 611 and both sides of the clip module 140, so there is no need to continually pull the drive wire 40. Thus, the structure described above allows for more efficient operation of the fender apparatus of the present disclosure.

Meanwhile, as illustrated in FIG. 10, while the arm 20 is being operated, the independent drive unit 70 maintains tension in the towing wire 71 using the weight block 74, preventing the towing wire 71 from drooping when the arm 20 and the fender unit 60 are raised or lowered. That is, when the arm 20 and the fender unit 60 are raised, since the position of the towing wire 71 is changed, the weight block 74 moves in response to the movement of the towing wire 71, thereby maintaining the tension of the towing wire 71 not to droop. While the independent drive unit 70 remains passive during the operation of the drive wire 40, once the drive wire is released and the fender unit 60 is released from the arm 20, the independent drive unit 70 can apply towing force only to the arm 20 to adjust the position of the arm 20 as necessary, thus easily removing interference caused by the arm. Hereinafter, referring to FIG. 12, the adjustment operation of the arm 20 using the independent drive unit 70 will be described in more detail.

FIG. 12 is a view illustrating the adjustment operation of the arm using the independent drive unit in the expanded state of the fender apparatus of FIG. 11.

In FIG. 12(a), when the arm 20 reaches the lowermost end 10a of the rail 10 (i.e., when the drive wire 40 is released till the arm 20 reaches the lowermost end 10a of the rail 10 by operating the actuator 50), the fender unit 60 is separated from the arm 20 and falls into the water B. In the above state, the fender unit 60 is aligned between the ships or between a ship and docking facilities to prevent collisions or impacts.

However, as illustrated in FIG. 12(a), since the arm 20 protrudes significantly outward from the hull A, the arm 20 may potentially interfere with external structures such as docking facilities. In such cases, as illustrated in FIG. 12(b), the towing wire 71 tows only the arm 20 in the state in which the drive wire is released to adjust the position of the arm 20. That is, in the state in which the fender unit 60 is released, the independent drive unit 70 applies towing force to the arm 20 independently of the drive wire 40, thereby adjusting only the position of the arm 20.

As described above, the independent drive unit 70 can apply towing force by contracting the cylinder unit 73 to increase the space between the variable pulley 722 and the fixed pulley 721. In this instance, since the weight block 74 is secured by a stopper 75, the other end of the towing wire 71 connected to the weight block 74 is in a fixed state, and a distance change between the variable pulley 722 and the fixed pulley 721 included by the cylinder contraction is directly acted to the arm 20, the towing wire 71 can be pulled as needed. Since the towing wire 71 is looped over the towing wire pulley 35 at the top of the rail 10, it is possible to tow the arm 20 to the top of the rail 10 by the towing wire 71 to be fastened to the clip module 140 (see FIG. 3).

As described above, since only the arm 20 can be moved by the independent drive unit 70, the fender unit 60 can remain in the water and only the arm 20 is moved to the inside of the hull, thereby easily removing interference with unnecessary external structures (not illustrated). Therefore, the present disclosure can be very effectively utilized in various situations. Thus, using the present disclosure, impacts can be eliminated and ships can be operated more efficiently.

Although the embodiments of the present disclosure have been described with reference to the accompanying drawings, it will be understood by those skilled in the art that the present disclosure can be implemented in other specific forms without changing the technical spirit or essential features thereof. Therefore, the embodiments described above should be considered in all respects as illustrative and not restrictive.

## Claims

1. A movable fender apparatus comprising:
a rail which is supported on a hull and inclined downward to the outside of the hull;
an arm of which one end is slidingly coupled to the rail;
at least one tension-adjusting pulley which is installed at the top of the rail, and at least two tension-adjusting pulleys which are installed at one end and the other end of the arm;
a drive wire which extends from the outside of the rail to the other end of the arm via the tension-adjusting pulley;
an actuator which adjusts the length of the drive wire by winding and unwinding one end of the drive wire located outside the rail; and
a fender unit which is connected to the other end of the drive wire located at the other end of the arm, wherein when the drive wire is wound, the fender unit pushes the arm to locate the arm at the top of the rail, and when released, the fender unit is released from the arm and falls into the water by its weight.

2. The movable fender apparatus according to claim 1, wherein the fender unit is automatically released from the arm when the arm stops by reaching the lowermost end of the rail.

3. The movable fender apparatus according to claim 2, wherein the rail includes a curved section that changes the path of the arm before reaching the lowermost end to change an angle of the arm in a direction that the inclination of the arm decreases.

4. The movable fender apparatus according to claim 3, further comprising:
interlocking parts which are arranged at the other end of the arm and the other end of the drive wire to engage with each other when adjacent, and are away from each other to be separated from each other as an included angle formed between the other end of the arm and the other end of the drive wire is increased by the angle change of the arm.

5. The movable fender apparatus according to claim 4, wherein the interlocking parts are separated from each other when the included angle exceeds a limit angle just before the arm reaches the lowermost end of the rail.

6. The movable fender apparatus according to claim 1, wherein the tension-adjusting pulley includes a first direction-changing pulley installed at the top of the rail, a second direction-changing pulley installed at the other end of the arm, and an arm-adjusting pulley installed at one end of the arm and positioned between the first and second direction-changing pulleys to be lower than the first and second direction-changing pulleys, thereby distributing the load of the arm to both sides of the drive wire of the first direction-changing pulley side and the drive wire of the second direction-changing pulley side.

7. The movable fender apparatus according to claim 6, further comprising:
a tensioner pulley provided between the first direction-changing pulley and the actuator and between the arm-adjusting pulley and the second direction-changing pulley to increase tension by pressurizing the drive wire.

8. The movable fender apparatus according to claim 1, further comprising:
an independent drive unit applying towing force to the arm independently from the drive wire to adjust only the position of the arm when the fender unit is released.

9. The movable fender apparatus according to claim 8, wherein the independent drive unit includes:
a pulley unit including a fixed pulley and a variable pulley;
a towing wire, one end of which is connected to the arm and the other end winds around the fixed pulley and the variable pulley at least once and is connected to a weight block; and
a cylinder unit connected to the variable pulley to be extendable to adjust a distance between the fixed pulley and the variable pulley, thereby providing towing force to the arm.

10. The movable fender apparatus according to claim 9, wherein in a fixed state of the cylinder unit, the towing wire is pulled by the weight block to maintain tension.

11. The movable fender apparatus according to claim 1, further comprising:
a locking hook formed on one side of the arm; and
a clip module installed at the top of the rail and repeatedly varied between an opening position and a coupling position coupled with the locking hook by pressure of the locking hook.

12. The movable fender apparatus according to claim 11, wherein the clip module includes:
a hook part which is coupled to a hinge shaft to swing vertically and includes a beveled part being in beveled contact with the locking hook to swing by a beveling action of the beveled part;
a way plate which is arranged vertically and has a flat cam track connecting a first fixed point and a second fixed point with different heights via a closed loop; and
a link, of which one end is connected to the hook part and the other end is inserted into the cam track, and which moves along the cam track as the hook part swings and varies the height of the hook part between the height corresponding to the first fixed point and the height corresponding to the second fixed point.

13. The movable fender apparatus according to claim 1, further comprising:
fender storage pockets which extend on both sides of the arm and are in contact with the sides of the fender unit to prevent movement of the fender unit being in contact with the arm.
